# EUROPÄISCHE PATENTSCHRIFT

(11) **EP 3 600 945 B1**
(45) Veröffentlichungstag und Bekanntmachung des Hinweises auf die Patenterteilung: **31.08.2022**
(21) Anmeldenummer: 18712526.5
(22) Anmeldetag: 12.03.2018
(51) Int. Cl.: B60L 7/24, B60L 7/26, B60T 17/22, B60T 8/172

(54) **BREMSVORRICHTUNG FÜR SCHIENENFAHRZEUGE UND VERFAHREN ZUM BREMSEN VON SCHIENENFAHRZEUGEN**
BRAKING DEVICE FOR RAIL VEHICLES AND METHOD FOR BRAKING RAIL VEHICLES
DISPOSITIF DE FREINAGE POUR VÉHICULES FERROVIAIRES ET PROCÉDÉ DE FREINAGE DE VÉHICULES FERROVIAIRES

(30) Priorität: 22.03.2017 DE 102017106118
(43) Veröffentlichungstag der Anmeldung: 05.02.2020
(73) Patentinhaber: KNORR-BREMSE Systeme für Schienenfahrzeuge GmbH, 80809 München (DE)
(72) Erfinder: STANKO, Michael, 80999 München (DE); FRIESEN, Ulf, 85579 Neubiberg (DE); GRUBER, Miriam, 80992 München (DE); VOIGTLÄNDER-TETZNER, Roland, 85591 Vaterstetten (DE); ZWILLING, Bernhard, 82061 Neuried (DE)
(86) Internationale Anmeldenummer: PCT/EP2018/056053
(87) Internationale Veröffentlichungsnummer: WO 2018/172117

(56) Entgegenhaltungen:
- EP-A1- 2 060 459
- EP-A2- 2 033 835
- WO-A1-2014/079490
- WO-A2-2013/034692
- DE-A1-102011 052 545
- DE-A1-102012 203 132
- DE-A1-102014 214 822
- FR-A1- 3 038 283
- US-B1- 8 744 652

## Beschreibung

Die Erfindung betrifft eine Bremsvorrichtung für Schienenfahrzeuge, ein Schienenfahrzeug bzw. einen Verbund von Schienenfahrzeugen mit einer solchen Bremsvorrichtung sowie ein Verfahren zum Bremsen von Schienenfahrzeugen.

Üblicherweise ist der Fahrzeugführer für den Betrieb eines Schienenfahrzeugs einschließlich Beschleunigen und Bremsen vollverantwortlich. In der Regel sind zusätzliche Sicherheitssysteme vorgesehen, die den Fahrzeugführer unterstützen bzw. überwachen und ggf. ein Anhalten des Schienenfahrzeugs erzwingen können. Hierzu zählen zum Beispiel eine Sicherheitsfahrschaltung (SiFa) oder Zugbeeinflussungssysteme wie eine Linienzugbeeinflussung (LZB) oder ein europäisches Zugsteuerungssystem (European Train Control System, ETCS).

Schienenfahrzeuge sind in der Regel mit mehreren Bremsbauarten ausgestattet, die in den verschiedenen Bremsungsarten zum Einsatz kommen. Zu den Bremsbauarten zählen insbesondere Druckluftbremsen, Reibungsbremsen, dynamische Bremsen und elektrodynamische Bremsen. Ferner werden elektro-pneumatische Bremsen zum Beispiel als eine Einrichtung zur Ansteuerung der Druckluftbremse zum gleichzeitigen Bremsen oder Lösen aller Bremsaktuatoren eines Wagens eines Schienenfahrzeugs oder auch mehrerer oder aller Wagen eines Schienenfahrzeugs eingesetzt. Zu den Bremsungsarten zählen insbesondere die Betriebsbremsung, die üblicherweise durch den Triebfahrzeugführer ausgelöst und nach seinem Ermessen verändert werden kann, und die Notbremsung, deren Eigenschaften durch ein vereinbartes Sicherheitsniveau bestimmt werden. Notbremsungen werden üblicherweise durch Reibungsbremsen, Magnetschienenbremsen, Wirbelstrombremsen und elektrodynamische Bremsen ausgeführt und werden bei einer pneumatischen Reibungsbremse zum Beispiel durch Absenken des Drucks in der Hauptluftleitung oder durch Öffnern einer entsprechenden Sicherheitsschleife ausgelöst.

Um das Schienenfahrzeug im regulären Betrieb abzubremsen oder zum Stehen zu bringen, hat der Triebfahrzeugführer ferner die Möglichkeit einer Betriebsbremsung. Bei der Betriebsbremsung können die Bremssysteme üblicherweise flexibel aus allen verfügbaren Bremssystemen ausgewählt werden und können die Bremsleistungen der ausgewählten Bremssysteme dynamisch angepasst werden, um eine angeforderte Bremsstufe zu erzielen. Falls die bei einer Betriebsbremsung eingesetzten Bremssysteme nicht die gewünschte Bremswirkung erzielen, liegt es herkömmlicherweise zum Beispiel in der Verantwortung des Triebfahrzeugführers, dies zu bemerken und eine Notbremsung zu veranlassen, welche in der Regel höhere Sicherheitsanforderungen erfüllt.

Bremsvorrichtungen für Schienenfahrzeuge und entsprechende Bremsverfahren sind bekannt aus der WO 2014/079490 A1, der DE 10 2014 214 822 A1 und der DE 10 2012 203 132 A1.

Es ist die Aufgabe der vorliegenden Erfindung, eine Bremsvorrichtung für Schienenfahrzeuge und ein Verfahren zum Bremsen eines Schienenfahrzeugs bereitzustellen, mit denen die Betriebssicherheit bei einer Betriebsbremsung verbessert werden kann.

Diese Aufgabe wird durch die Lehre der unabhängigen Ansprüche gelöst. Besonders vorteilhafte Ausführungsformen der Erfindung sind in den abhängigen Ansprüchen angegeben.

Die erfindungsgemäße Bremsvorrichtung für Schienenfahrzeuge weist auf: wenigstens eine Bremssteuerung zum Ansteuern wenigstens eines Bremssystems des Schienenfahrzeugs; eine erste Anforderungseinrichtung mit wenigstens einem Steuerelement zum Anfordern einer Betriebsbremsung des Schienenfahrzeugs; einen Zugbremsmanager, der ausgestaltet ist, um beim Aktivieren der ersten Anforderungseinrichtung die wenigstens eine Bremssteuerung gemäß einem Betriebsbremsmodus anzusteuern; und eine zweite Anforderungseinrichtung zum Ansteuern der wenigstens einen Bremssteuerung gemäß einem Notbremsmodus. Die erfindungsgemäße Bremsvorrichtung weist ferner eine Überwachungseinrichtung zum Überwachen einer Bremswirkung der über die erste Anforderungseinrichtung angeforderten Betriebsbremsung im Betriebsbremsmodus des Schienenfahrzeugs auf, welche die zweite Anforderungseinrichtung in Abhängigkeit von der überwachten Bremswirkung der Betriebsbremsung im Betriebsbremsmodus aktiviert. Erfindungsgemäß ist die Überwachungseinrichtung derart ausgestaltet, dass sie die überwachte Bremswirkung (Aist) der Betriebsbremsung im Betriebsbremsmodus mit einem vorgegebenen Bremswirkungsgrenzwert (Asoll) vergleicht und die zweite Anforderungseinrichtung aktiviert, falls die überwachte Bremswirkung den Bremswirkungsgrenzwert unterschreitet (Aist < Asoll) bzw. nicht überschreitet (Aist ≤ Asoll).

Gemäß der Erfindung wird vorgeschlagen, beim Anfordern einer Betriebsbremsung zum Beispiel durch einen Triebfahrzeugführer oder eine automatische Sicherungs- und/oder Steuerungseinrichtung die wenigstens eine Bremssteuerung des wenigstens einen Bremssystems des Schienenfahrzeugs zunächst in einem Betriebsbremsmodus anzusteuern und die so erzielte Bremswirkung mittels einer Überwachungseinrichtung zu überwachen. Wird bei dieser Überwachung festgestellt, dass die Bremswirkung für die angeforderte Betriebsbremsung unzureichend ist, so wird automatisch vom Betriebsbremsmodus in einen Notbremsmodus gewechselt. Da der Notbremsmodus im Vergleich zum Betriebsbremsmodus höhere Sicherheitsanforderungen erfüllt, kann durch das automatische Auslösen des Notbremsmodus die Betriebsbremsung in ihrer Sicherheit angehoben werden. Besonders vorteilhaft ist dies bei einer Vollbremsung, d.h. bei einer Betriebsbremsung mit maximaler Bremsstufe. Mit der erfindungsgemäßen Bremsvorrichtung können der Fahrzeugführer oder eine automatische Sicherungs- und/oder Steuerungseinrichtung so unterstützt werden. Außerdem kann mit der erfindungsgemäßen Bremsvorrichtung der technologische Übergang zum führerlosen Fahren von Schienenfahrzeugen weiter vorangetrieben werden.

Die Betriebsbremsung im Betriebsbremsmodus soll auf keine speziellen Betriebsbremsmodi beschränkt sein. Vorzugsweise ist der Zugbremsmanager ausgestaltet, um die wenigstens eine Bremssteuerung im Betriebsbremsmodus derart anzusteuern, dass die wenigstens eine Bremssteuerung alle zur Verfügung stehenden Bremssysteme flexibel und dynamisch zum Erzielen einer gewünschten Bremswirkung ansteuert.

Die Betriebsbremsung im Notbremsmodus entspricht zum Beispiel einer herkömmlichen Notbremsung. Die Erfindung soll aber auf keine speziellen Notbremsmodi beschränkt sein. Vorzugsweise ist die zweite Anforderungseinrichtung ausgestaltet, um die wenigstens eine Bremssteuerung im Notbremsmodus derart anzusteuern, dass die wenigstens eine Bremssteuerung die für eine Notbremsung bestimmten oder vorgegebenen Bremssysteme zum Erzielen der einer Notbremsung entsprechenden Bremswirkung ansteuert.

Die Bremswirkung kann in diesem Zusammenhang anhand eines oder mehrerer Parameter ermittelt werden. Hierzu zählen insbesondere eine Verzögerung des Schienenfahrzeugs, eine Gesamtbremskraft des Schienenfahrzeugs, eine Geschwindigkeit bzw. Geschwindigkeitsveränderung des Schienenfahrzeugs, ein zurückgelegter Weg des Schienenfahrzeugs zwischen zwei Messpunkten, eine Energiemenge einer Energierückgewinnung bei deren Wandlung, Ableitung oder Speicherung, und dergleichen.

Die erste Anforderungseinrichtung kann vorzugsweise einen mit dem Zugbremsmanager verbundenen Fahrzeugbus, eine mit dem Zugbremsmanager verbundene Zugsteuerleitung und/oder eine direkte elektrische Anbindung eines Steuerelements an den Zugbremsmanager aufweisen. Die zweite Anforderungseinrichtung kann vorzugsweise durch eine Sicherheitsschleife oder ein Bussystem gebildet sein. Die Anforderungseinrichtungen können sich dabei zum Beispiel fahrzeugweit (d.h. innerhalb eines Fahrzeugs) oder zugweit (d.h. über einen Verbund aus mehreren Fahrzeugen hinweg) erstrecken.

Der Zugbremsmanager ist in diesem Zusammenhang eine beliebige Steuereinrichtung, die geeignet ist, Bremssteuerungen von Schienenfahrzeugen - z.B. direkt oder über ein Netzwerk (z.B. Fahrzeugbus) - zu managen bzw. anzusteuern. Vorzugsweise ist der Zugbremsmanager auch geeignet, die Bremssteuerungen und/oder die von diesen angesteuerten Bremssysteme des Schienenfahrzeugs zu überwachen. Der Zugbremsmanager ist bevorzugt in eine größere Steuereinrichtung wie beispielsweise eine Fahrzeugsteuerung integriert oder als separate Steuereinrichtung ausgestaltet. Der Zugbremsmanager ist bevorzugt mit der Fahrzeugsteuerung verbunden oder in diese integriert.

In einer vorteilhaften Ausgestaltung der Erfindung ist die Überwachungseinrichtung mit einem Auslöser der zweiten Anforderungseinrichtung verbunden. Die Überwachungseinrichtung betätigt diesen Auslöser in Abhängigkeit von der überwachten Bremswirkung der Betriebsbremsung im Betriebsbremsmodus, um die zweite Anforderungseinrichtung zu aktivieren.

Vorzugsweise ist die Überwachungseinrichtung zudem derart ausgestaltet, dass sie die zweite Anforderungseinrichtung nur aktiviert, falls ein vorgegebener Grenzwert eines vorbestimmten Toleranzkriteriums für eine unzureichende Bremswirkung der Betriebsbremsung im Betriebsbremsmodus (nach oben oder nach unten) überschritten wird. Bei dem Toleranzkriterium handelt es sich zum Beispiel um ein Zeitfenster, sodass die zweite Anforderungseinrichtung nur aktiviert wird, falls eine Zeitdauer (Tist) der unzureichenden Bremswirkung einen vorgegeben Zeitgrenzwert (Tlimit) überschreitet (Tist > Tlimit) bzw. nicht unterschreitet (Tist ≥ Tlimit). Allgemein kann das Toleranzkriterium einer unzureichenden Bremswirkung zum Beispiel zeitabhängig, wegabhängig und/oder geschwindigkeitsabhängig sein.

In einer weiteren vorteilhaften Ausgestaltung der Erfindung ist die Überwachungseinrichtung derart ausgestaltet, dass sie bei der Betriebsbremsung im Notbremsmodus die zweite Anforderungseinrichtung wieder deaktiviert, falls die erste Anforderungseinrichtung deaktiviert wird. Auf diese Weise kann zum Beispiel der Triebfahrzeugführer bei Bedarf eine durch ihn ausgelöste Betriebsbremsung wieder unterbrechen bzw. abbrechen, auch wenn diese bereits im Notbremsmodus ausgeführt worden ist.

In einer noch weiteren vorteilhaften Ausgestaltung der Erfindung ist das wenigstens eine Steuerelement der ersten Anforderungseinrichtung ausgestaltet, um eine Bremsstufe der angeforderten Betriebsbremsung einzustellen. D.h. das Anfordern der Betriebsbremsung umfasst ein Auslösen der Betriebsbremsung und ein Einstellen einer gewünschten Bremsstufe für die ausgelöste Betriebsbremsung. Die maximale Bremsstufe entspricht beispielsweise einer Vollbremsung. Die Bremsstufen können mit dem Steuerelement vorzugsweise in mehreren vorgegebenen Stufen oder stufenlos eingestellt werden. Bei dieser Ausgestaltung ist der Zugbremsmanager bevorzugt ausgestaltet, um die wenigstens eine Bremssteuerung im Betriebsbremsmodus zum Erzielen der eingestellten Bremsstufe anzusteuern. Ferner ist bei dieser Ausgestaltung die Überwachungseinrichtung bevorzugt ausgestaltet, um die Bremswirkung der Betriebsbremsung im Betriebsbremsmodus entsprechend der eingestellten Bremsstufe zu überwachen.

Gegenstand der Erfindung ist auch ein Schienenfahrzeug, das wenigstens eine oben beschriebene Bremsvorrichtung der Erfindung aufweist.

Gegenstand der Erfindung ist außerdem ein Verbund von Schienenfahrzeugen, der wenigstens eine oben beschriebene Bremsvorrichtung der Erfindung aufweist.

Als Schienenfahrzeug werden in diesem Zusammenhang alle Arten von Wagen mit oder ohne eigenen Antrieb und fest gekoppelte Einheiten aus mehreren solchen Wagen bezeichnet. Ein Verbund von Schienenfahrzeugen wird üblicherweise auch als Zug bezeichnet und wird durch variables Koppeln mehrerer Schienenfahrzeuge gebildet.

Das erfindungsgemäße Verfahren zum Bremsen eines Schienenfahrzeugs enthält die Schritte des Ansteuerns der Bremssysteme eines Schienenfahrzeugs gemäß einem Betriebsbremsmodus, wenn durch eine erste Anforderungseinrichtung eine Betriebsbremsung angefordert wird; des Überwachens einer Bremswirkung der über die erste Anforderungseinrichtung angeforderten Betriebsbremsung im Betriebsbremsmodus; und des Wechsels einer Ansteuerung der Bremssysteme des Schienenfahrzeugs in Abhängigkeit von der überwachten Bremswirkung der Betriebsbremsung im Betriebsbremsmodus vom Betriebsbremsmodus in einen Notbremsmodus.

Mit diesem Verfahren der Erfindung können die gleichen Vorteile erzielt werden, die oben in Zusammenhang mit der erfindungsgemäßen Bremsvorrichtung erläutert sind. Bezüglich der Vorteile, der Begriffsdefinitionen und der bevorzugten Ausführungsformen wird daher ergänzend auf die obigen Ausführungen verwiesen.

Erfindungsgemäß wird die überwachte Bremswirkung der Betriebsbremsung im Betriebsbremsmodus mit einem vorgegebenen Bremswirkungsgrenzwert verglichen und wird in den Notbremsmodus gewechselt, falls die überwachte Bremswirkung diesen Bremswirkungsgrenzwert unterschreitet bzw. nicht überschreitet.

Vorzugsweise wird in den Notbremsmodus nur gewechselt, falls ein vorgegebener Grenzwert eines vorbestimmten Toleranzkriteriums für eine unzureichende Bremswirkung (nach oben oder unten) überschritten wird.

In einer vorteilhaften Ausgestaltung der Erfindung werden der Betriebsbremsmodus und der durch das Überwachen der Bremswirkung ausgelöste Notbremsmodus aufgehoben, falls die Betriebsbremsung aufgehoben wird, d.h. keine Anforderung über die erste Anforderungseinrichtung mehr vorliegt.

In einer weiteren vorteilhaften Ausgestaltung der Erfindung wird die Bremswirkung der Betriebsbremsung im Betriebsbremsmodus durch eine Überwachungseinrichtung überwacht und wird eine Funktionsfähigkeit dieser Überwachungseinrichtung überwacht. Das Überwachungsergebnis der Funktionsfähigkeit (z.B. ordnungsgemäße Funktion, Funktionsbereitschaft, etc.) wird vorzugsweise angezeigt, bevorzugt dem Triebfahrzeugführer des Schienenfahrzeugs. Im Fall einer erkannten Fehlfunktion der Überwachungseinrichtung wird die Überwachungseinrichtung vorzugsweise automatisch oder manuell deaktiviert. In einer Ausführungsvariante der Erfindung wird bei deaktivierter Überwachungseinrichtung nicht mehr automatisch der Notbremsmodus eingeleitet, sodass bei Deaktivierung der Überwachungseinrichtung auch die Fahrerunterstützung wegfällt und das Schienenfahrzeug wie herkömmlich betrieben werden kann. In einer anderen Ausführungsvariante der Erfindung kann abhängig vom Steuerelement das Auslösen einer Betriebsbremsung über die erste Anforderungseinrichtung vorzugsweise direkt zum Aktivieren der zweiten Anforderungseinrichtung führen oder andere Sicherheitsmaßnahmen einleiten.

In noch einer weiteren vorteilhaften Ausgestaltung der Erfindung erfolgt die Anforderung der Betriebsbremsung in mehreren einstellbaren Bremsstufen, d.h. zusammen mit der Einstellung einer von mehreren vorgegebenen oder stufenlos einstellbaren Bremsstufen. Bei dieser Ausgestaltung wird die Bremswirkung der Betriebsbremsung im Betriebsbremsmodus bevorzugt entsprechend der eingestellten Bremsstufe überwacht. Das erfindungsgemäße Bremsverfahren ist vorzugsweise zum Ausführen einer Vollbremsung, d.h. einer Betriebsbremsung mit höchster Bremsstufe verwendbar. Da bei einer Vollbremsung die Betriebssicherheit besonders wichtig ist, ist das Bremsverfahren der Erfindung hier von besonderem Vorteil.

Obige sowie weitere Vorteile, Merkmale und Anwendungsmöglichkeiten der Erfindung werden aus der nachfolgenden Beschreibung eines Ausführungsbeispiels anhand der beiliegenden Zeichnungen besser verständlich. Darin zeigen, größtenteils schematisch:
- Fig. 1: das Prinzip einer Bremsvorrichtung für Schienenfahrzeuge gemäß der vorliegenden Erfindung;
- Fig. 2: ein Flussdiagramm für ein Verfahren zum Bremsen eines Schienenfahrzeugs gemäß der vorliegenden Erfindung; und
- Fig. 3: ein Zustandsdiagramm für ein Verfahren zum Bremsen eines Schienenfahrzeugs gemäß der vorliegenden Erfindung.

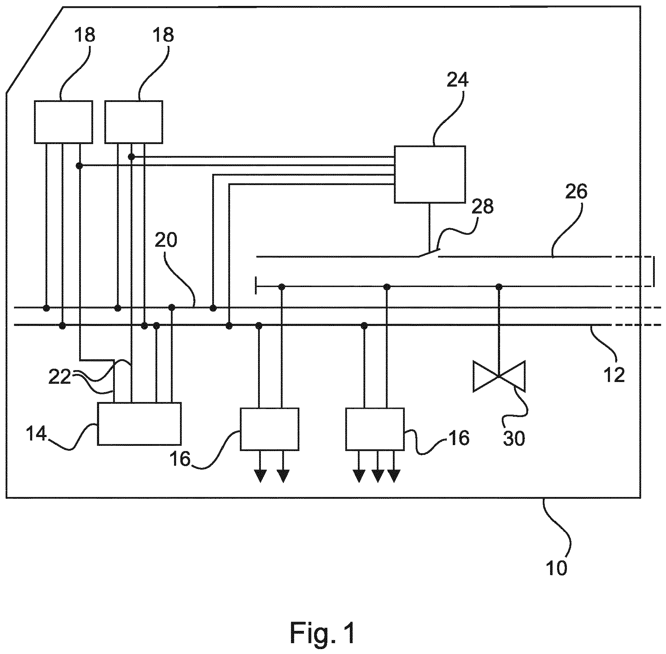

**Fig. 1** veranschaulicht den Aufbau und die Funktionsweise einer Bremsvorrichtung für Schienenfahrzeuge gemäß einem Ausführungsbeispiel der Erfindung. Fig. 1 zeigt beispielhaft ein Schienenfahrzeug 10 in Form eines Triebwagens oder Wagens als Teil eines Zuges bzw. Fahrzeugverbundes aus mehreren miteinander gekoppelten Schienenfahrzeugen.

Ein zugweiter Fahrzeugbus 12 verbindet die mehreren Schienenfahrzeuge 10 des Zuges miteinander. Der Fahrzeugbus 12 kann zum Beispiel durch ein leitungsgebundenes Bussystem und/oder ein drahtloses Bussystem (Funk, WLAN, etc.) gebildet sein. Zudem verlaufen optional ein oder mehrere zugweite Zugsteuerleitungen 20 parallel zum Fahrzeugbus 12.

Das Schienenfahrzeug 10 weist einen Zugbremsmanager 14 und ein oder mehrere Bremssteuerungen 16 auf, die jeweils an den Fahrzeugbus 12 angeschlossen sind. Der Zugbremsmanager 14 ist außerdem mit der wenigstens einen Zugsteuerleitung 20 verbunden. Die Bremssteuerungen 16 steuern jeweils ein oder mehrere, gleiche oder unterschiedliche Bremssysteme des Schienenfahrzeugs 10 an. Die von den Bremssteuerungen 16 angesteuerten Bremssysteme weisen zum Beispiel Druckluftbremsen, Reibungsbremsen, dynamische Bremsen, elektrodynamische Bremsen, Wirbelstrombremsen, Magnetschienenbremsen, etc. auf.

Zum Anfordern einer Betriebsbremsung sind ein oder mehrere Steuerelemente 18 vorgesehen, mit denen eine Betriebsbremsung ausgelöst und eine gewünschte oder erforderliche Bremsstufe für die Betriebsbremsung eingestellt werden kann. Die Steuerelemente 18 weisen zum Beispiel einen durch den Fahrzeugführer bedienbaren Führerbremshebel, eine automatische Sicherungs- und/oder Steuerungseinrichtung, etc. auf. Die Steuerelemente 18 sind über eine erste Anforderungseinrichtung mit dem Zugbremsmanager 14 verbunden. Diese erste Anforderungseinrichtung wird in diesem Ausführungsbeispiel durch den Fahrzeugbus 12, die wenigstens eine Zugsteuerleitung 20 (optional vorhanden) und direkte elektrische Anbindungen 22 von den Steuerelementen 18 an den Zugbremsmanager 14 (optional vorhanden) gebildet. Vorzugsweise umfasst die erste Anforderungseinrichtung zumindest zwei der genannten Komponenten.

Bei einer Aktivierung der ersten Anforderungseinrichtung 12, 20, 22 durch Betätigen eines Steuerelements 18 steuert der Zugbremsmanager 14 über den Fahrzeugbus 12 die Bremssteuerungen 16 gemäß einem Betriebsmodus entsprechend der eingestellten Bremsstufe.

Die Bremsvorrichtung für das Schienenfahrzeug 10 weist ferner eine Überwachungseinrichtung 24 auf. Diese Überwachungseinrichtung 24 ist mit dem Fahrzeugbus 12, der wenigstens einen Zugsteuerleitung 20 und den direkten elektrischen Anbindungen 22 der Steuerelemente 18 an den Zugbremsmanager 14, die als erste Anforderungseinrichtung dienen, verbunden, um über eine Anforderung einer Betriebsbremsung informiert zu werden. Die über die Steuerelemente 18 eingestellte Bremsstufe kann der Überwachungseinrichtung 24 zum Beispiel über ein codiertes Steuersignal mitgeteilt werden, beispielsweise über den Fahrzeugbus 12 oder als ein PWM-Signal über eine Zugsteuerleitung 20 oder als digitaler Code über mehrere Zugsteuerleitungen 20.

Das Schienenfahrzeug 10 weist ferner eine zugweite Notbremsschleife als zweite Anforderungseinrichtung 26 auf. Die zweite Anforderungseinrichtung 26 ist zum Beispiel eine Sicherheitsschleife, die durch ein Notbremsventil 30 eine Bremsung des Schienenfahrzeugs 10 aktivieren kann.

Die zweite Anforderungseinrichtung 26 weist wenigstens einen Auslöser 28 auf. Dieser Auslöser 28 ist mit der Überwachungseinrichtung 24 gekoppelt, sodass dieser durch die Überwachungseinrichtung 24 betätigt werden kann. Die zweite Anforderungseinrichtung 26 ist außerdem mit den Bremssteuerungen 16 des Schienenfahrzeugs 10 bzw. der Schienenfahrzeugen des Zuges gekoppelt. Bei einer Aktivierung der zweiten Anforderungseinrichtung 26 durch Betätigen des Auslösers 28 werden die Bremssteuerungen 16 gemäß einem Notbremsmodus angesteuert. Die zweite Anforderungseinrichtung 26 wird durch Betätigen des Auslösers 28 aktiviert. Im Fall einer Sicherheitsschleife erfolgt das Aktivieren dabei üblicherweise durch ein Öffnen der Sicherheitsschleife.

Der Notbremsmodus erfüllt üblicherweise zumindest die gleichen, bevorzugt höhere Sicherheitsanforderungen als der Betriebsbremsmodus.

Die Überwachungseinrichtung 24 prüft im Fall eines durch ein Steuerelement 18 der ersten Anforderungseinrichtung 12, 20, 22 angeforderten Betriebsbremsung, ob eine ausreichende Bremswirkung für die eingestellte Bremsstufe der ausgelösten Betriebsbremsung vorliegt. Zu diesem Zweck ist die Überwachungseinrichtung 24 beispielsweise derart ausgestaltet, dass sie die überwachte Bremswirkung Aist der Betriebsbremsung im Betriebsbremsmodus mit einem vorgegebenen Bremswirkungsgrenzwert Asoll vergleicht und die zweite Anforderungseinrichtung 26 über den Auslöser 28 aktiviert, falls die überwachte Bremswirkung Aist den Bremswirkungsgrenzwert Asoll unterschreitet (Aist < Asoll) bzw. nicht überschreitet (Aist ≤ Asoll). Die Bremswirkung kann dabei von der Überwachungseinrichtung 24 anhand eines oder mehrerer Parameter ermittelt werden. Geeignete Parameter sind insbesondere eine Verzögerung, eine Gesamtbremskraft und eine Geschwindigkeit bzw. Geschwindigkeitsveränderung des Schienenfahrzeugs 10, ein zurückgelegter Weg des Schienenfahrzeugs 10 zwischen zwei Messpunkten, Bremskräfte, Reaktionskräfte und/oder Momente an den Bremssystemen sowie eine Energiemenge einer Energierückgewinnung während des Bremsvorgangs bei deren Wandlung, Ableitung oder Speicherung.

Um ein unnötiges Auslösen des zweiten Notbremsmodus durch Aktivieren der zweiten Anforderungseinrichtung 26 zum Beispiel aufgrund von kurzzeitigen Schwankungen eines überwachten Parameters der Bremswirkung zu vermeiden, ist bevorzugt vorgesehen, dass die Überwachungseinrichtung 24 die zweite Anforderungseinrichtung 26 nur aktiviert, falls ein vorgegebener Grenzwert eines vorbestimmten Toleranzkriteriums für eine unzureichende Bremswirkung der Betriebsbremsung im Betriebsbremsmodus über- oder unterschritten wird. Bei dem Toleranzkriterium kann es sich zum Beispiel um ein Zeitfenster handeln, sodass die zweite Anforderungseinrichtung 26 nur aktiviert wird, falls eine Zeitdauer (Tist) der unzureichenden Bremswirkung einen vorgegeben Zeitgrenzwert (Tlimit) überschreitet (Tist > Tlimit) bzw. nicht unterschreitet (Tist ≥ Tlimit). Allgemein kann das Toleranzkriterium einer unzureichenden Bremswirkung zeitabhängig, wegabhängig und/oder geschwindigkeitsabhängig konzipiert sein.

Im Betriebsbremsmodus steuert der Zugbremsmanager 14 die Bremssteuerungen 16 so an, dass diese alle zur Verfügung stehenden Bremssysteme flexibel und dynamisch zum Erzielen einer Bremswirkung ansteuern, die der eingestellten Bremsstufe der gewünschten Betriebsbremsung entspricht. Dabei können die Bremssysteme des Schienenfahrzeugs 10 flexibel aus allen verfügbaren Bremssystemen ausgewählt werden und können die Bremsleistungen der ausgewählten Bremssysteme dynamisch angepasst werden.

Eine erhöhte Betriebssicherheit dieser Betriebsbremsung wird bei der erfindungsgemäßen Bremsvorrichtung durch die Überwachung der Bremswirkung durch die Überwachungseinrichtung 24 und den bei Bedarf aktivierten Notbremsmodus erzielt. Im Notbremsmodus werden die für eine Notbremsung bestimmten oder vorgegebenen Bremssysteme ansteuert, wobei der Notbremsmodus aber auf keine spezielle Ausführungsform eines Notbremsmodus beschränkt ist.

Hebt der Fahrzeugführer die Betriebsbremsung über die Steuerelemente 18 wieder auf, so wird automatisch der Betriebsbremsmodus beendet oder, falls die Überwachungseinrichtung 24 über den Auslöser 28 die zweite Anforderungseinrichtung 26 aktiviert hatte, automatisch der Notbremsmodus aufgehoben. D.h. der Fahrzeugführer hat vorzugsweise die Möglichkeit, unter bestimmten Voraussetzungen auch die zur Absicherung der Betriebsbremsung vorgesehene Notbremsung zu unterbrechen bzw. zu beenden.

Verändert der Fahrzeugführer die Bremsstufe der Betriebsbremsung über die Steuerelemente 18, so werden der Betriebsbremsmodus und die Überwachung der Bremswirkung durch die Überwachungseinrichtung 24 an die geänderte Bremsstufe angepasst.

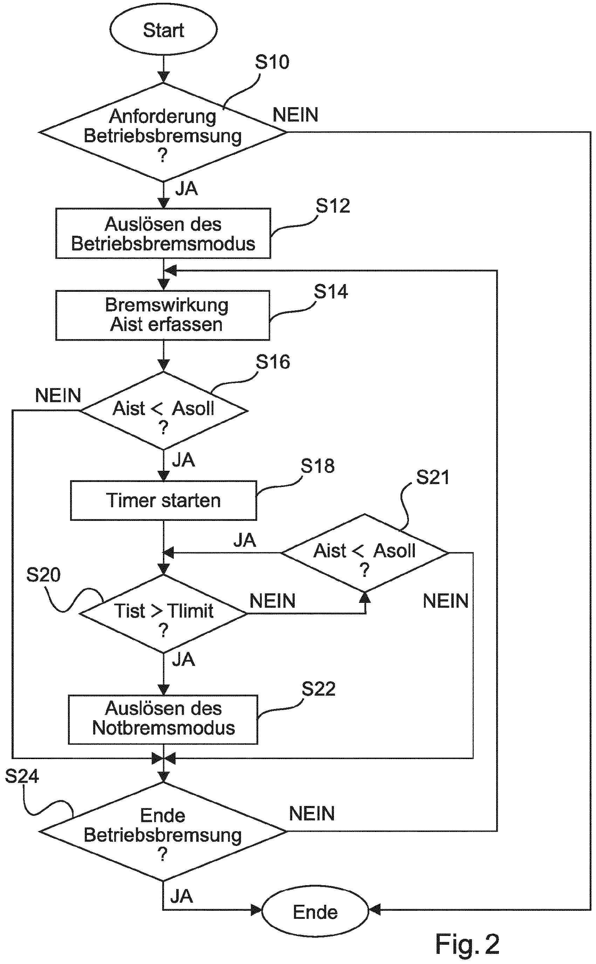

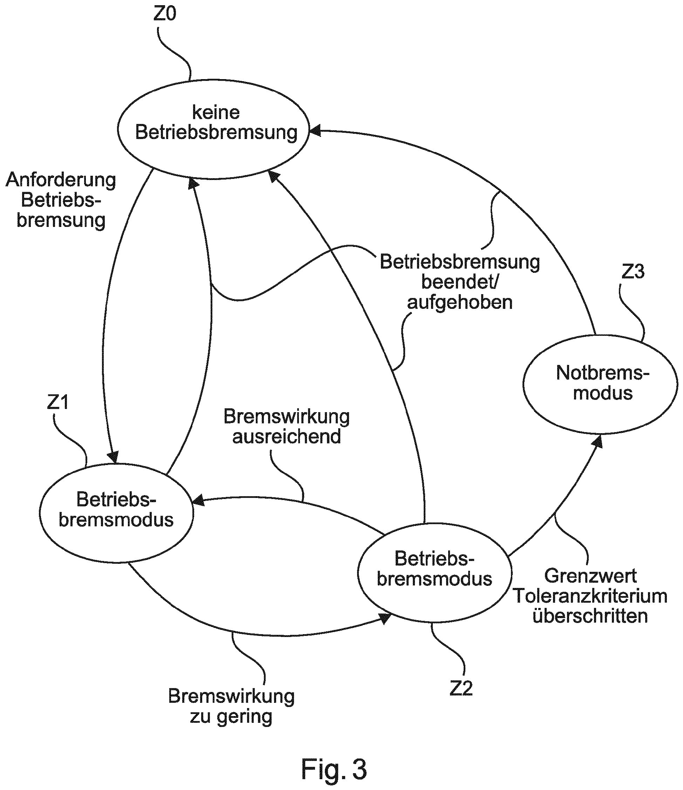

Fig. 2 und 3 zeigen beispielhaft ein Verfahren zum Ausführen einer elektronisch überwachten Betriebsbremsung eines Schienenfahrzeugs 10 gemäß der Erfindung.

Ausgehend von einem Zustand Z0, in dem keine Betriebsbremsung ausgeführt wird, wird in einem ersten Schritt S10 überprüft, ob eine Anforderung für eine Betriebsbremsung vorliegt, d.h. ob zum Beispiel der Fahrzeugführer ein Steuerelement 18 der ersten Anforderungseinrichtung 12, 20, 22 betätigt hat. Falls dies nicht der Fall ist, werden keine weiteren Schritte zum Durchführen einer Betriebsbremsung ausgeführt. Andernfalls wird in Schritt S12 der Betriebsbremsmodus ausgelöst, sodass die Bremsvorrichtung in den Zustand Z1 wechselt.

Anschließend wird in Schritt S14 die aktuelle Bremswirkung Aist des Schienenfahrzeugs 10 beispielsweise in Form einer Verzögerung, einer Gesamtbremskraft oder einer Geschwindigkeitsänderung des Schienenfahrzeugs 10 ermittelt.

In Schritt S16 prüft dann die Überwachungseinrichtung 24, ob die aktuelle Bremswirkung Aist für die eingestellte Bremsstufe der Betriebsbremsung des Schienenfahrzeugs 10 ausreichend ist. Hierzu vergleicht sie beispielsweise den Istwert der Bremswirkung Aist mit einem vorgegebenen Bremswirkungsgrenzwert Asoll.

Falls der Istwert der Bremswirkung Aist den Sollwert der Bremswirkung Asoll unterschreitet (Aist < Asoll), d.h. bei einer Entscheidung "JA" in Schritt S16, gelangt die Bremsvorrichtung in den Zustand Z2. In diesem Zustand Z2 wird weiterhin der Betriebsbremsmodus ausgeführt, aber wird zudem ein Toleranzkriterium für die unzureichende Bremswirkung überwacht. Wie in Fig. 2 dargestellt, wird beispielsweise in Schritt S18 ein Timer gestartet, um eine Zeitdauer Tist zu ermitteln, wie lange die unzureichende Bremswirkung vorliegt. Die Zeitdauer Tist wird in Schritt S20 mit einem vorgegebenen Zeitgrenzwert Tlimit verglichen. Falls die Zeitdauer der unzureichenden Bremswirkung Tist noch unterhalb des Zeitgrenzwerts Tlimit liegt ("NEIN" in Schritt S20), wird die Bremswirkung in einem Schritt S21 weiter überwacht und weiterhin das hier zeitliche Toleranzkriterium überwacht.

Falls festgestellt wird, dass die Bremswirkung innerhalb des Zeitgrenzwerts Tlimit doch wieder ausreichend wird ("NEIN" in Schritt S21) kehrt die Bremsvorrichtung wieder in den Zustand Z1 zurück und setzt den Betriebsbremsmodus unverändert fort.

Falls hingegen die Zeitdauer der unzureichenden Bremswirkung Tist den vorgegebenen Zeitgrenzwert Tlimit überschreitet ("JA" in Schritt S20), d.h. falls allgemein ein vorgegebener Grenzwert eines vorbestimmten Toleranzkriteriums über- oder unterschritten wird, wird die Bremsvorrichtung in einen Zustand Z3 überführt, indem in Schritt S22 der Notbremsmodus ausgelöst wird. Wie oben beschrieben, erfolgt dies durch eine Betätigung des Auslösers 28 der zweiten Anforderungseinrichtung 26 zum Beispiel durch ein entsprechendes Signal von der Überwachungseinrichtung 24.

Anschließend wird in Schritt S24 geprüft, ob die elektronisch überwachte Betriebsbremsung zum Beispiel durch den Fahrzeugführer wieder aufgehoben worden ist. Falls dies der Fall ist, wird das komplette Bremsverfahren beendet und die Bremsvorrichtung ausgehend von Zustand Z1, Zustand Z2 oder Zustand Z3 wieder zurück in den Ausgangszustand Z0 ohne Betriebsbremsung überführt. Andernfalls ("NEIN" in Schritt S24) wird das Bremsverfahren fortgesetzt, zum Beispiel wieder mit Schritt S14.

Wird während der Ausführung der Betriebsbremsung über die Steuerelemente 18 die gewünschte Bremsstufe verändert, so werden der Betriebsbremsmodus in den Zuständen Z1 und Z2 sowie die Überwachung der Bremswirkung durch die Überwachungseinrichtung 24 in den Schritte S16 bis S21 entsprechend an die geänderte Bremsstufe angepasst.

Das beschriebene Bremsverfahren der Erfindung ist insbesondere für das Durchführen einer Vollbremsung, d.h. einer Betriebsbremsung mit höchster Bremsstufe von Vorteil, da in diesem Fall die Betriebssicherheit besonders wichtig ist.

### BEZUGSZEICHENLISTE

- 10: Schienenfahrzeug
- 12: Fahrzeugbus
- 14: Zugbremsmanager
- 16: Bremssteuerung
- 18: Steuerelement
- 20: Zugsteuerleitung
- 22: direkte elektrische Anbindung
- 24: Überwachungseinrichtung
- 26: zweite Anforderungseinrichtung
- 28: Auslöser zweite Anforderungseinrichtung
- 30: Notbremsventil
- Aist: Istwert Bremswirkung
- Asoll: Sollwert Bremswirkung
- Tist: aktueller Wert Toleranzkriterium (z.B. Zeitdauer unzureichende Bremswirkung)
- Tlimit: Grenzwert Toleranzkriterium (z.B. Zeitgrenzwert unzureichende Bremswirkung)

## Patentansprüche

1. Bremsvorrichtung für Schienenfahrzeuge, aufweisend:
wenigstens eine Bremssteuerung (16) zum Ansteuern wenigstens eines Bremssystems des Schienenfahrzeugs (10);
eine erste Anforderungseinrichtung (12, 20, 22) mit wenigstens einem Steuerelement (18) zum Anfordern einer Betriebsbremsung des Schienenfahrzeugs (10);
einen Zugbremsmanager (14), der ausgestaltet ist, um beim Aktivieren der ersten Anforderungseinrichtung (12, 20, 22) die wenigstens eine Bremssteuerung (16) gemäß einem Betriebsbremsmodus (Z1, Z2) anzusteuern;
eine zweite Anforderungseinrichtung (26) zum Ansteuern der wenigstens einen Bremssteuerung (16) gemäß einem Notbremsmodus (Z3); und
eine Überwachungseinrichtung (24) zum Überwachen einer Bremswirkung (Aist) der über die erste Anforderungseinrichtung (12, 20, 22) angeforderten Betriebsbremsung im Betriebsbremsmodus (Z1, Z2) des Schienenfahrzeugs (10), wobei die Überwachungseinrichtung (24) die zweite Anforderungseinrichtung (26) in Abhängigkeit von der überwachten Bremswirkung (Aist) der Betriebsbremsung im Betriebsbremsmodus (Z1, Z2) aktiviert;
**dadurch gekennzeichnet, dass**
die Überwachungseinrichtung (24) ausgestaltet ist, um die überwachte Bremswirkung (Aist) der Betriebsbremsung im Betriebsbremsmodus (Z1, Z2) mit einem vorgegebenen Bremswirkungsgrenzwert (Asoll) zu vergleichen und die zweite Anforderungseinrichtung (26) zu aktivieren, falls die überwachte Bremswirkung (Aist) den Bremswirkungsgrenzwert (Asoll) unterschreitet bzw. nicht überschreitet.

2. Bremsvorrichtung für Schienenfahrzeuge nach Anspruch 1, bei welchem
die Überwachungseinrichtung (24) mit einem Auslöser (28) der zweiten Anforderungseinrichtung (26) verbunden ist und diesen in Abhängigkeit von der überwachten Bremswirkung (Aist) der Betriebsbremsung im Betriebsbremsmodus (Z1, Z2) betätigt, um die zweite Anforderungseinrichtung (26) zu aktivieren.

3. Bremsvorrichtung für Schienenfahrzeuge nach Anspruch 1, bei welchem
die Überwachungseinrichtung (24) ausgestaltet ist, um die zweite Anforderungseinrichtung (26) nur zu aktivieren, falls ein vorgegebener Grenzwert (Tlimit) eines vorbestimmten Toleranzkriteriums für eine unzureichende Bremswirkung der Betriebsbremsung im Betriebsbremsmodus (Z1, Z2) überschritten wird.

4. Bremsvorrichtung für Schienenfahrzeuge nach einem der vorhergehenden Ansprüche, bei welchem
die Überwachungseinrichtung (24) ausgestaltet ist, um bei der Betriebsbremsung im Notbremsmodus die zweite Anforderungseinrichtung (26) wieder zu deaktivieren, falls die erste Anforderungseinrichtung (20) deaktiviert wird.

5. Bremsvorrichtung für Schienenfahrzeuge nach einem der vorhergehenden Ansprüche, bei welchem
das wenigstens eine Steuerelement (18) der ersten Anforderungseinrichtung (12, 20, 22) ausgestaltet ist, um eine Bremsstufe der angeforderten Betriebsbremsung einzustellen;
der Zugbremsmanager (14) ausgestaltet ist, um die wenigstens eine Bremssteuerung (16) im Betriebsbremsmodus (Z1, Z2) zum Erzielen der eingestellten Bremsstufe anzusteuern; und
die Überwachungseinrichtung (24) ausgestaltet ist, um die Bremswirkung (Aist) der Betriebsbremsurig im Betriebsbremsmodus (Z1, Z2) entsprechend der eingestellten Bremsstufe zu überwachen.

6. Bremsvorrichtung für Schienenfahrzeuge nach einem der vorhergehenden Ansprüche, bei welchem
die erste Anforderungseinrichtung (12, 20, 22) einen mit dem Zugbremsmanager (14) verbundenen Fahrzeugbus (12), eine mit dem Zugbremsmanager (14) verbundene Zugsteuerleitung (20) und/oder eine direkte elektrische Anbindung (22) eines Steuerelements (18) an den Zugbremsmanager (14) aufweist.

7. Schienenfahrzeug (10), welches wenigstens eine Bremsvorrichtung nach einem der Ansprüche 1 bis 6 aufweist.

8. Verbund aus mehreren Schienenfahrzeugen (10), welcher wenigstens eine Bremsvorrichtung nach einem der Ansprüche 1 bis 6 aufweist.

9. Verfahren zum Bremsen von Schienenfahrzeugen (10), mit den Schritten:
Ansteuern der Bremssysteme eines Schienenfahrzeugs gemäß einem Betriebsbremsmodus (Z1, Z2), wenn durch eine erste Anforderungseinrichtung (20) eine Betriebsbremsung angefordert wird; und
Überwachen einer Bremswirkung (Aist) der über die erste Anforderungseinrichtung (20) angeforderten Betriebsbremsung im Betriebsbremsmodus (Z1, Z2);
wobei eine Ansteuerung der Bremssysteme des Schienenfahrzeugs (10) in Abhängigkeit von der überwachten Bremswirkung (Aist) der Betriebsbremsung im Betriebsbremsmodus (Z1, Z2) vom Betriebsbremsmodus (Z1, Z2) in einen Notbremsmodus (Z3) wechselt;
**dadurch gekennzeichnet, dass**
die überwachte Bremswirkung (Aist) der Betriebsbremsung im Betriebsbremsmodus (Z1, Z2) mit einem vorgegebenen Bremswirkungsgrenzwert (Asoll) verglichen wird und in den Notbremsmodus (Z3) gewechselt wird, falls die überwachte Bremswirkung (Aist) den Bremswirkungsgrenzwert (Asoll) unterschreitet bzw. nicht überschreitet.

10. Verfahren nach Anspruch 9, bei welchem
in den Notbremsmodus (Z3) nur gewechselt wird, falls ein vorgegebener Grenzwert (Tlimit) eines vorbestimmten Toleranzkriteriums für eine unzureichende Bremswirkung der Betriebsbremsung im Betriebsbremsmodus (Z1, Z2) überschritten wird.

11. Verfahren nach einem der Ansprüche 9 oder 10, bei welchem
falls die Betriebsbremsung aufgehoben wird, der Betriebsbremsmodus (Z1, Z2) und der durch das Überwachen der Bremswirkung ausgelöste Notbremsmodus (Z3) aufgehoben werden.

12. Verfahren nach einem der Ansprüche 9 bis 11, bei welchem
die Bremswirkung (Aist) der Betriebsbremsung im Betriebsbremsmodus (Z1, Z2) durch eine Überwachungseinrichtung (24) überwacht wird; und
eine Funktionsfähigkeit der Überwachungseinrichtung (24) überwacht wird.

13. Verfahren nach einem der Ansprüche 9 bis 12, bei welchem
die Anforderung der Betriebsbremsung in mehreren einstellbaren Bremsstufen erfolgt; und
die Bremswirkung (Aist) der Betriebsbremsung im Betriebsbremsmodus (Z1, Z2) entsprechend der eingestellten Bremsstufe überwacht wird.

14. Verwendung des Verfahrens nach einem der Ansprüche 9 bis 13 zum Ausführen einer Vollbremsung eines Schienenfahrzeugs.

## Claims

1. Braking device for rail vehicles, having:
at least one brake controller (16) for actuating at least one brake system of the rail vehicle (10);
a first requesting device (12, 20, 22) having at least one control element (18) for requesting service braking of the rail vehicle (10);
a train brake manager (14) that is designed to actuate the at least one brake controller (16) in a service braking mode (Z1, Z2) upon activation of the first requesting device (12, 20, 22);
a second requesting device (26) for actuating the at least one brake controller (16) in an emergency braking mode (Z3); and
a monitoring device (24) for monitoring a braking effect (Aactual) of the service braking, requested by the first requesting device (12, 20, 22), in the service braking mode (Z1, Z2) of the rail vehicle (10), wherein the monitoring device (24) activates the second requesting device (26) depending on the monitored braking effect (Aactual) of the service braking in the service braking mode (Z1, Z2),
**characterised in that**
the monitoring device (24) is designed to compare the monitored braking effect (Aactual) of the service braking in the service braking mode (Z1, Z2) with a predefined braking effect limit value (Asetpoint) and to activate the second requesting device (26) if the monitoring braking effect (Aactual) falls below or does not exceed the braking effect limit value (Asetpoint).

2. Braking device for rail vehicles according to claim 1, in which
the monitoring device (24) is connected to a trigger (28) of the second requesting device (26) and actuates this trigger depending on the monitored braking effect (Aactual) of the service braking in the service braking mode (Z1, Z2), in order to activate the second requesting device (26).

3. Braking device for rail vehicles according to claim 1, in which
the monitoring device (24) is designed to activate the second requesting device (26) only if a predefined limit value (Tlimit) of a predetermined tolerance criterion for an insufficient braking effect of the service braking in the service braking mode (Z1, Z2) is crossed.

4. Braking device for rail vehicles according to one of the preceding claims, in which
the monitoring device (24) is designed to deactivate the second requesting device (26) again in the case of service braking in the emergency braking mode if the first requesting device (20) is deactivated.

5. Braking device for rail vehicles according to one of the preceding claims, in which
the at least one control element (18) of the first requesting device (12, 20, 22) is designed to set a braking level of the requested service braking;
the train brake manager (14) is designed to actuate the at least one brake controller (16) in the service braking mode (Z1, Z2) in order to achieve the set braking level; and
the monitoring device (24) is designed to monitor the braking effect (Aactual) of the service braking in the service braking mode (Z1, Z2) in accordance with the set braking level.

6. Braking device for rail vehicles according to one of the preceding claims, in which
the first requesting device (12, 20, 22) has a vehicle bus (12) connected to the train brake manager (14), a train control line (20) connected to the train brake manager (14) and/or a direct electrical connection (22) of a control element (18) to the train brake manager (14).

7. Rail vehicle (10) that has at least one braking device according to one of claims 1 to 6.

8. Group consisting of a plurality of rail vehicles (10) that has at least one braking device according to one of claims 1 to 6.

9. Method for braking rail vehicles (10), having the steps:
actuating the brake systems of a rail vehicle in a service braking mode (Z1, Z2) when service braking is requested by a first requesting device (20); and
monitoring a braking effect (Aactual) of the service braking, requested by the first requesting device (20), in the service braking mode (Z1, Z2),
wherein actuation of the brake systems of the rail vehicle (10) changes from the service braking mode (Z1, Z2) to an emergency braking mode (Z3) depending on the monitored braking effect (Aactual) of the service braking in the service braking mode (Z1, Z2),
**characterised in that**
the monitored braking effect (Aactual) of the service braking in the service braking mode (Z1, Z2) is compared with a predefined braking effect limit value (Asetpoint) and there is a change to the emergency braking mode (Z3) if the monitored braking effect (Aactual) falls below or does not exceed the braking effect limit value (Asetpoint).

10. Method according to claim 9, in which
there is a change to the emergency braking mode (Z3) only if a predefined limit value (Tlimit) of a predetermined tolerance criterion for an insufficient braking effect of the service braking in the service braking mode (Z1, Z2) is crossed.

11. Method according to one of claims 9 or 10, in which
the service braking mode (Z1, Z2) and the emergency braking mode (Z3) triggered by the monitoring of the braking effect are cancelled if the service braking is cancelled.

12. Method according to one of claims 9 to 11, in which
the braking effect (Aactual) of the service braking in the service braking mode (Z1, Z2) is monitored by a monitoring device (24); and
a functionality of the monitoring device (24) is monitored.

13. Method according to one of claims 9 to 12, in which
the request for service braking is made in a plurality of settable braking levels; and
the braking effect (Aactual) of the service braking in the service braking mode (Z1, Z2) is monitored in accordance with the set braking level.

14. Use of the method according to one of claims 9 to 13 to carry out full braking of a rail vehicle.

## Revendications

1. Installation de freinage de véhicules ferroviaires, comportant :
au moins une commande (16) de frein pour la commande d'au moins un système de frein du véhicule (10) ferroviaire,
un premier dispositif (12, 20, 22) de demande ayant au moins un élément (18) de commande pour demander un freinage de service du véhicule (10) ferroviaire ;
un gestionnaire (14) de frein de train, qui est conformé pour, à l'activation du premier dispositif (12, 20, 22) de demande, commander la au moins une commande (16) de frein suivant un mode (Z1, Z2) de freinage de service ;
un deuxième dispositif (26) de demande pour la commande de la au moins une commande (16) de frein suivant un mode (Z3) de freinage d'urgence ; et
un dispositif (24) de contrôle pour le contrôle d'un effet (Aist) de freinage du freinage de service demandé par le premier dispositif (12, 20, 22) de demande dans le mode (Z1, Z2) de fonctionnement de service du véhicule (10) ferroviaire, le dispositif (24) de contrôle activant dans le mode (Z1, Z2) de freinage de service le deuxième dispositif (26) de demande en fonction de l'effet (Aist) de freinage contrôlé du freinage de service ;
**caractérisée en ce que**
le dispositif (24) de contrôle est conformé pour comparer l'effet (Aist) de freinage contrôlé du freinage de service, dans le mode (Z1, Z2) de freinage de service, à une valeur (Asoll) limite d'effet de freinage donnée à l'avance et pour activer le deuxième dispositif (26) de demande, si l'effet (Aist) de freinage contrôlé est inférieur ou n'est pas supérieur à la valeur (Asoll) limite d'effet de freinage.

2. Installation de freinage de véhicules ferroviaires suivant la revendication 1, dans laquelle
le dispositif (24) de contrôle est relié à un déclencheur (28) du deuxième dispositif (26) de demande et l'actionne, en fonction de l'effet (Aist) de freinage contrôlé du freinage de service dans le mode (Z1, Z2) de freinage de service, pour activer le deuxième dispositif (26) de demande.

3. Installation de freinage de véhicules ferroviaires suivant la revendication 1, dans laquelle
le dispositif (24) de contrôle est conformé pour n'activer le deuxième dispositif (26) de demande que si une valeur (Tlimit) limite donnée à l'avance d'un critère de tolérance défini à l'avance d'un effet de freinage insuffisant du freinage de service dans le mode (Z1,Z2) de frein de service est dépassée

4. Installation de freinage de véhicules ferroviaires suivant l'une des revendications précédentes, dans laquelle
le dispositif (24) de contrôle est conformé pour redésactiver, lors du freinage de service dans le mode de freinage d'urgence du deuxième dispositif (26) de demande, si le premier dispositif (20) de demande est désactivé.

5. Installation de freinage de véhicules ferroviaires suivant l'une des revendications précédentes, dans laquelle
le au moins un élément (18) de commande du premier dispositif (12, 20, 22) de demande est conformé pour régler un stade de freinage du freinage de service demandé ;
le gestionnaire (14) de frein de train est conformé pour commander la au moins une commande (16) de freinage dans le mode (Z1, Z2) de freinage de service, afin d'obtenir le stade de freinage réglé ; et
le dispositif (24) de contrôle est conformé pour contrôler l'effet (Aist) de freinage du freinage de service dans le mode (Z1, Z2) de freinage de service, conformément au stade de freinage réglé.

6. Installation de freinage de véhicules ferroviaires suivant l'une des revendications précédentes, dans laquelle
le premier dispositif (12, 20, 22) de demande a un bus (12) de véhicule relié au gestionnaire (14) de frein de train, une ligne (20) de commande de train reliée au gestionnaire (14) de frein de train et/ou une liaison (22) électrique directe d'un élément (18) de commande avec le gestionnaire (14) de frein de train.

7. Véhicule (10) ferroviaire, qui a au moins une installation de freinage suivant l'une des revendications 1 à 6.

8. Convoi de plusieurs véhicules (10) ferroviaires, qui a au moins une installation de freinage suivant l'une des revendications 1 à 6.

9. Procédé de freinage de véhicules (10) ferroviaires, comprenant les stades :
commande des systèmes de freinage d'un véhicule ferroviaire suivant un mode (Z1, Z2) de freinage de service, si un freinage de service est demandé par un premier dispositif (20) de demande ; et
contrôle d'un effet (Aist) de freinage du freinage de service demandé par le premier dispositif (20) de demande dans le mode (Z1, Z2) de freinage de service ;
dans lequel une commande des systèmes de freinage du véhicule (10) ferroviaire passe en fonction de l'effet (Aist) de freinage contrôlé du freinage de service dans le mode (Z1, Z2) de freinage de service du mode (Z1,Z2) de freinage de service dans un mode (Z3) de freinage d'urgence ;
**caractérisé en ce que**
on compare l'effet (Aist) de freinage contrôlé du freinage de service dans le mode (Z1, Z2) de freinage de service à une valeur (Asoll) limite d'effet de freinage donnée à l'avance et on passe dans le mode (Z3) de freinage d'urgence, si l'effet (Aist) de freinage contrôlé est inférieur ou ne dépasse pas la valeur (Asoll) limite d'effet de freinage.

10. Procédé suivant la revendication 9, dans lequel
on ne passe dans le mode (Z3) de freinage d'urgence que si une valeur (Tlimit) donnée à l'avance d'un critère de tolérance défini à l'avance d'un effet de freinage insuffisant du freinage de service dans le mode (Z1, Z2) de freinage de service est dépassé.

11. Procédé suivant l'une des revendications 9 ou 10, dans lequel
si on arrête le freinage de service, on arrête le mode (Z1, Z2) de freinage de service et le mode (Z3) de freinage d'urgence déclenché par le contrôle de l'effet de freinage.

12. Procédé suivant l'une des revendications 9 à 11, dans lequel
on contrôle l'effet (Aist) de freinage de service dans le mode (Z1, Z2) de freinage de service par un dispositif (24) de contrôle ; et
on contrôle l'aptitude à fonctionner du dispositif (24) de contrôle.

13. Procédé suivant l'une des revendications 9 à 12, dans lequel
la demande du freinage de service s'effectue en plusieurs stades de freinage réglables ; et
on contrôle conformément aux stades de freinage réglés l'effet (Aist) de freinage du freinage de service dans le mode (Z1, Z2) de frein de service.

14. Utilisation du procédé suivant l'une des revendications 9 à 13 pour la réalisation d'un freinage complet d'un véhicule ferroviaire.
